# EUROPEAN PATENT SPECIFICATION

(11) **EP 2 108 539 B1**
(45) Date of publication and mention of the grant of the patent: **12.01.2011**
(21) Application number: 08154258.1
(22) Date of filing: 09.04.2008
(51) Int. Cl.: B60N 2/12, B60N 2/30

(54) **Passenger seat device for motor vehicles**
Beifahrersitzvorrichtung für Motorfahrzeuge
Dispositif de siège passager pour véhicules à moteur

(43) Date of publication of application: 14.10.2009
(73) Proprietor: Hyundai Motor Europe Technical Center GmbH, 65428 Rüsselsheim (DE); HYUNDAI MOTOR COMPANY, Seoul (KR); Kia Motors Corporation, Seoul (KR)
(72) Inventor: Classen, Peter, 65428 Rüsselsheim (DE); Höfer, Carsten, 65428 Rüsselsheim (DE)
(74) Representative: Barth, Stephan Manuel

(56) References cited:
- WO-A-95/09095
- DE-B- 1 127 936
- DE-C1- 10 249 444
- FR-A- 2 710 012
- SU-A1- 1 020 360
- US-A- 802 519
- US-A- 2 858 880
- US-A- 5 056 849
- US-A- 5 076 643
- US-A1- 2004 183 329

## Description

The present invention relates to a passenger seat device for motor vehicles according to the preamble of independent claim 1, which is known from DE 102 49 444 C1.

Similar passenger seat devices are also disclosed in DE 1 127 936, SU 1020360 A, US 802,519, US 2,858,880 and US 5,056,849.

US 5,076,643 discloses a lumbar support assembly for a seat including an air cushion between the seat shell and the seat cushion.

WO 95/09095 discloses an automatic locking device for an auxiliary seat suitable for a backrest of a rear-facing auxiliary seat.

Without limiting their general applicability, the present invention and the problems on which it is based are explained in relation to passenger seat devices for automobiles.

It is desirable, particularly in vehicles with three or more rows of seats, e.g. vans, for the passenger seats to be able to adopt several seat positions, e.g. forward position and backward position, and for a change of seat position to be achieved by technically simple means.

Passenger seats which can be rotated about a vertical axis of rotation to alter the seat position are generally known. However, this solution requires a great deal of lateral space because the seats are generally longer than they are wide.

The inventive passenger seat device according to Claim 1 has the advantage that it allows a change of seat position from the forward to the backward position in a space-saving manner and by technically simple means.

The idea on which this invention is based consists in designing a bearing device for a seat shell so that it can be swivelled about a horizontal axis from a seat position orientated in the forward direction to a seat position orientated in the backward direction, as a result of which a backrest region and a seating area of the seat shell can be interchanged according to the two different seat positions.

Advantageous embodiments and improvements of the invention are described in the dependent claims.

According to a preferred embodiment the bearing device has two support struts which can be articulated to the seat shell device in the form of a four-bar linkage on the one hand, and to the motor vehicle on the other.

According to a further preferred embodiments the bearing device has a first rail device which can be fastened in the vehicle floor, and a second rail device which is linear displaceable in the first rail device, the two supporting struts being mounted one behind the other in the second rail device along a horizontal swivel axis.

According to a further preferred embodiment the seat cushion device in the seat shell device is fitted displaceably so that projects from the seat shell device in the longitudinal direction in each seat position in the backrest region and seals essentially flush with the seat shell device in the longitudinal direction in the seat region.

According to a further preferred embodiments a first and second headrest device are fitted retractably to the longitudinal ends of the seat cushion device, as a result of which a head rest device can be retracted in the seat region in both seat positions and the other headrest device can be extended in the backrest region.

According to a further preferred embodiment at least one air cushion pad device is provided between the seat shell device and the seat cushion device, as a result of which a distance between the seat shell device and the seat cushion device is variable in the region of the air cushion pad device.

According to the present invention a seat belt reel device with a reelable seat belt is provided in a pelvic region of the seat shell device on one side, and a first seat belt lock is provided on the other side, a second seat belt lock being provided at the longitudinal end of the first half-shell region, and a third seat belt lock being provided at the longitudinal end of the second half-shell region, and a first and second stop tongue part being provided on the seat belt, which parts can be engaged either in the first and second or in the first and third seat belt locks according to the seat position.

According to a further preferred embodiment the seat shell device is produced in one piece, the first and second half-shell regions being symmetrical to each other.

According to a further preferred embodiment at least one of the half-shell devices is on the rear side a receiving device for receiving a corresponding engaging device of an emergency seat.

According to a further preferred embodiment the receiving device is vertically adjustable so that the received emergency seat can be lifted out vertically upwards from a locking device and can be re-inserted into the locking device.

According to a further preferred embodiment a drive motor is provided for swivelling the seat shell device.

According to a further preferred embodiment the seat shell device is a plastic moulding.

Exemplary embodiments of the invention are shown in the drawings and explained in greater detail in the following description.
- Fig. 1: shows a perspective view of a motor vehicle seat ar- rangement, including a seat device according to an em- bodiment of this invention;
- Fig. 2a,b: show cross-sectional views of a motor vehicle floor rail for the displaceable receiving of the seat device according to the embodiment of this invention;
- Fig. 3: shows a side view of the seat device according to the embodiment of this invention;
- Fig. 4a-e: show side views of the seat device according to the em- bodiment of this invention in different swivel posi- tions to explain a seat folding mechanism;
- Fig. 5a,b: show a side view and a perspective view of the seat de- vice according to the embodiment of this invention in different swivel positions to explain a backrest ad- justment mechanism;
- Fig. 6a,b: show a perspective view of a motor vehicle seat ar- rangement including a seat device according to the em- bodiment of this invention to explain a seat belt mechanism;
- Fig. 7a-d: show side views of the seat device according to the em- bodiment of this invention to explain an emergency seat displacement mechanism.

In the figures the same reference symbols denote the same or functionally the same components.

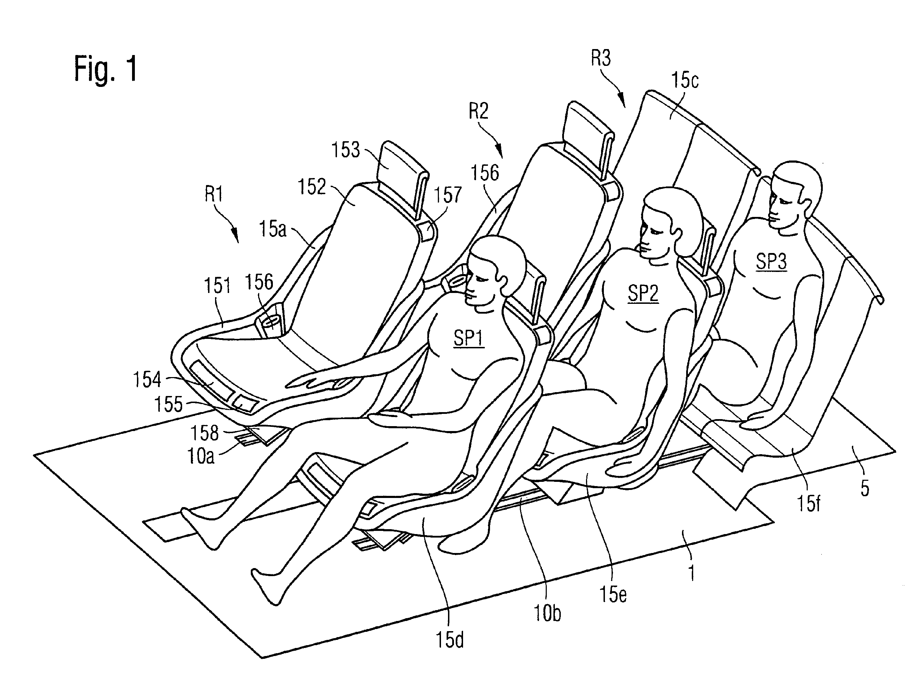

Fig. 1 is a perspective view of a motor vehicle seat arrangement including a seat device according to an embodiment of this invention.

In Fig. 1 reference symbol 1 denotes a floor carpet in a passenger space of a motor vehicle. The passenger space continues in its rear region, which terminates in a loading space, not shown in greater detail, in a platform-like elevation 5. An essentially parallel first and second rail 10a, 10b are let into floor carpet 1, in which rails are displaceably mounted passenger seats 15, 15b and 15d, 15e respectively. Passenger seats 15a, 15b are located in a first front seat row R1, and passenger seats 15d, 15e are located in a middle seat row R2. Two emergency seats 15c, 15f are fitted in a receiving device (to be explained later) in a rear seat row R3, which lies immediately in front of the loading space. Emergency seats 15c, 15f are not displaceable Reference symbols SP1, SP2, SP3 denote persons who are sitting on passenger seats 15d, 15e, 15f.

With reference to passenger seat 15a, some features which are also present in passenger seats 15b, 15d, 15e are explained in greater detail below, but for reasons of clarity these features are not denoted separately with reference symbols.

Passenger seat 15a has an outer seat shell 151 of plastic, in which an inner seat cushion device 152 is fitted. A headrest 153 is provided retractably in seat cushion device 152 in the head region. Reference symbol 154 denotes a further headrest which is retracted in it at the longitudinal end of the seat region of seat cushion device 152.

Reference symbols 155, 156, 157 each denote a seat belt lock whose functions are explained in more detail later. Finally, reference symbol 158 denotes a cover for a bearing device by means of which passenger seat 15a or passenger seats 15b, 15d, 15e are mounted retractably in the corresponding rail 10a, 10b in the motor vehicle floor.

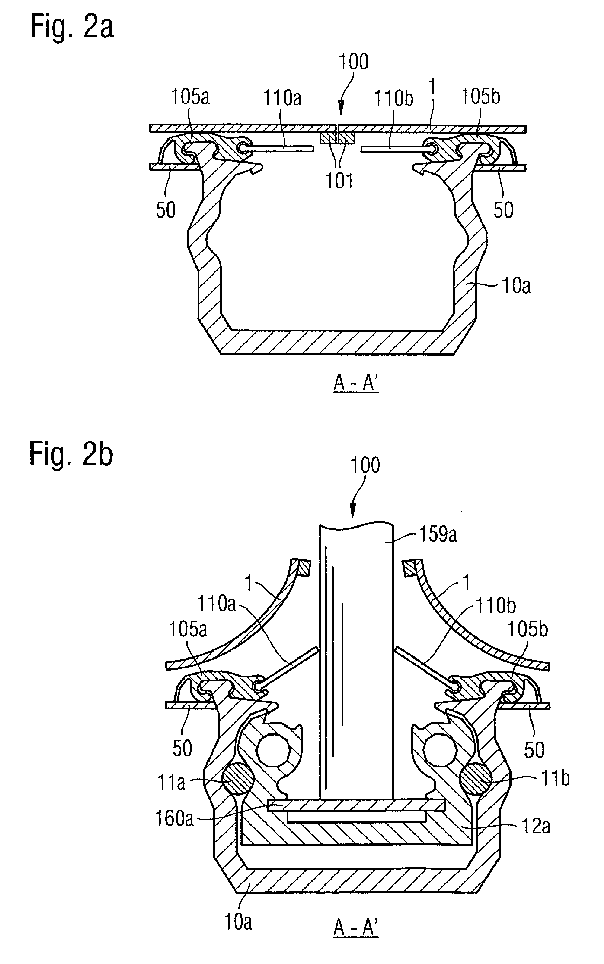

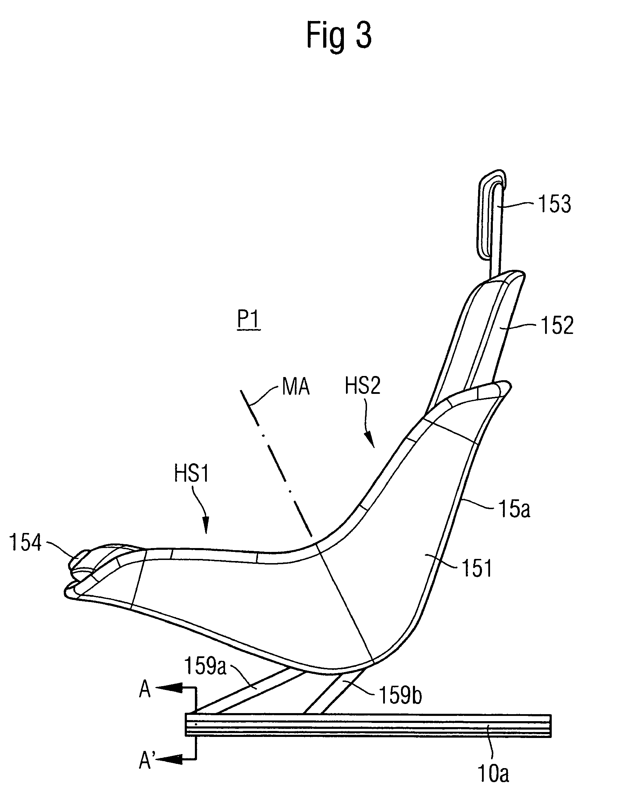

Fig. 2a,b are cross-sectional views of a motor vehicle floor rail for displaceably receiving the seat device according to the embodiment of this invention, and Fig. 3 is a side view of the seat device according to the embodiment of this invention.

Fig. 2a shows rail 10a, which is let into the vehicle floor, without a passenger seat inserted, whereas Fig. 2b shows how passenger seat 15a or 15b, 15d, 15e are inserted into rail 10a by means of a further rail 12a. It should be noted that rail 10a, which in this case runs continuously in the longitudinal direction through floor 1 of the motor vehicle, exerts a stabilising action, i.e. increases the rigidity of the motor vehicle floor. It should also be mentioned that it is obviously also possible to provide rail 10a so that it is not continuous but only has suitable rail segments.

As shown in Fig. 2a, rail 10a has an essentially U-shaped profile. A support device 105a, 105b, on which is mounted a flap 110a, 110b, are provided on the upper sides of the each of the flanks of rail 10a, which flaps run essentially parallel to the base of rail 10a in the condition without the passenger seat inserted.

Reference symbol 50 denotes a floor panel of the motor vehicle concerned, into which rail 10a is inserted so that support devices 105a, 105b lie on floor panel 50.

Floor carpet 1, for example a plastic mat, has a gap 100 running longitudinally to the rail centre, which gap is kept essentially closed by a magnet device 101 in the condition without the inserted passenger seat, so that floor does not run in a curved manner but flat.

As shown in Figs. 2b and 3, the bearing device which supports the passenger seat in the motor vehicle has a second rail 12a which is inserted in first rail 10a so that it can be displaced in the longitudinal direction. Roller bearings 11a, 11b, which allow essentially friction-free displacement of second rail 12a of the passenger seat along the inside of rail 10a, are suitably inserted between first rail 10a and second rail 12a. A first and second supporting strut 159a, 159b are fitted on a horizontal swivel axis 160a, which is pivoted in second rail 12a, these struts making a connection to seat shell 151. When the passenger seat is inserted, supporting struts 159a, 159b force flaps 110a, 110b and floor 1 outwardly upwards in the region of rail 12a.

As can be seen in Fig. 3, supporting struts 159a, 159b are provided in seat position P1 shown in Fig. 1, orientated in the forward direction, in a first angle position angled to the rear (on the right in Fig. 3). First and second supporting struts 159a, 159b in seat shell 151 run along similar swivel axes to those explained in relation to second rail 12a, so that the two supporting struts 159a, 159b assume the form of a four bar linkage.

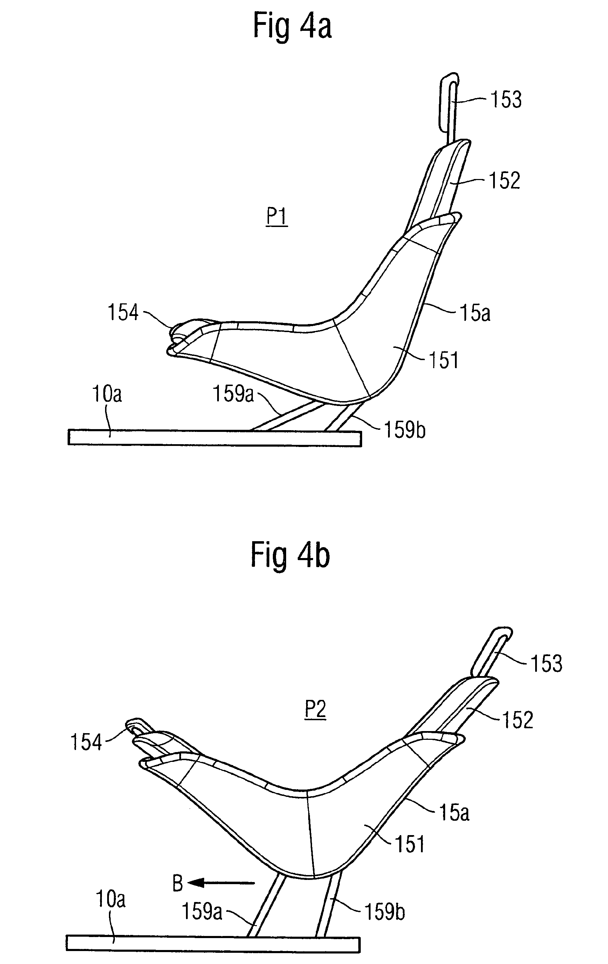

In seat position P1 shown a stop (not shown) for supporting struts 159a, 159b is also provided in the seat shell and in inner rail 12a, which stop prevents supporting struts 159a, 159b from being able to yield further to buckling in the backward direction. A change of angle in the forward direction is effected by a self-locking of a drive motor installed preferably in passenger seat 15a, which motor is designed to swivel seat shell 151 and hence the entire passenger seat 15a from seat position P1 orientated in the forward position to a seat position P5 orientated in the backward direction, which is explained in detail below with reference to Figs. 4a to e.

In this connection it is mentioned, in particular, that seat shell 151 is shaped symmetrically to an axis of symmetry MA, this axis of symmetry MA being divided into a first and second half-shell region HS1, HS2, where the two half-shell regions HS1, HS2 can serve both as a backrest region and as a seat region, which, when the two seat positions P1/P5 are changed, enable the backrest region and the seat region of seat shell 151 to be easily exchanged.

Figs. 4a-e are side views of the seat device according to the embodiment of this invention in different swivel positions to explain a seat folding mechanism.

Fig. 4a corresponds to seat position P1, already explained with reference to Fig. 3, in the forward direction, as also shown in Fig. 1.

When the drive motor (not shown) is actuated, the angular position of supporting struts 159a, 159b, provided in the form of a four-bar linkage, is changed.

Fig. 4b shows an intermediate position P2, from which it can be seen that seat cushion device 152 is also displaced relative to seat shell 151, and that headrests 153, 154 can be adjusted relative to seat cushion device 152. The latter takes place by means of corresponding further drive motors or reduction gears which are coupled to the first drive motor.

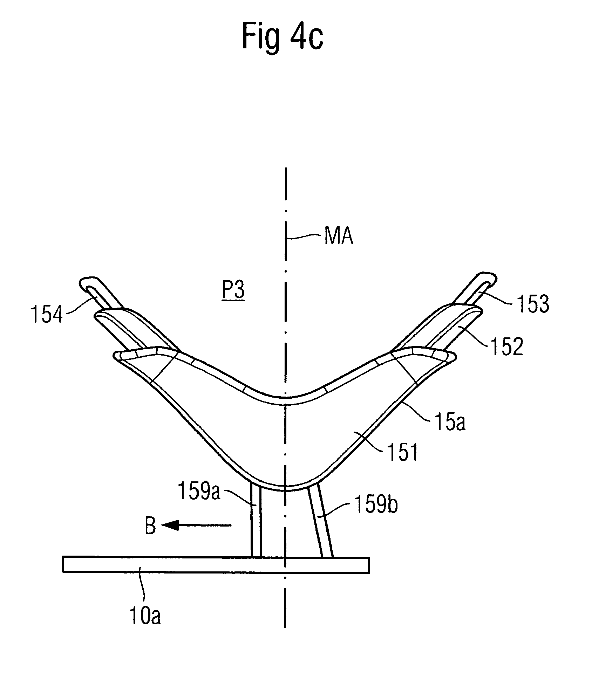

The representation in Fig. 4c shows the achievement of a central position P3, where seat shell 151 is arranged horizontally and with its axis of symmetry MA essentially perpendicular to rail 10a. As can also be seen in Fig. 4c, headrest 153 is further retracted in seat cushion device 152 and headrest 154 is further extended from seat cushion device 152 in comparison to position P2. Moreover, seat cushion device 152, which in seat position P1 in the seat region is still sealing flush at the longitudinal end with seat shell 151, is further displaced from the right side of seat shell 151 to the left side of seat shell 151.

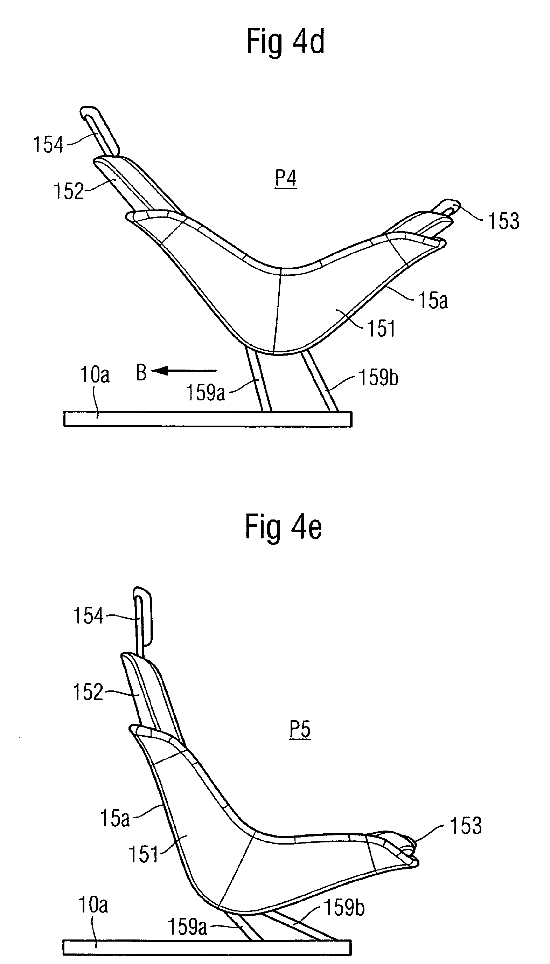

An intermediate position P4, which is symmetrical to seat position P2, is also shown with reference to Fig. 4d, supporting struts 159a, 159b now being angled in the forward direction relative to first rail 10a.

Finally, with reference to Fig. 4e, seat position P5 is reached which is orientated in the backward direction. In this seat position P5 the backrest region and the seat region are exchanged in comparison to seat position P1 in the forward direction.

Furthermore, headrest 153 is fully retracted and headrest 154 is fully extended in seat position P5. Moreover, seat cushion device 152 lies essentially flush with seat shell 151 in the new seat region in the longitudinal direction, whereas seat cushion device 152 projects from seat shell 151 in the new backrest region.

Similar to seat position P1, a stop (not shown) is provided in seat shell 151 and in rail 12a for supporting struts 159a, 159b, which stop prevents supporting struts 159a, 159b from buckling further in the forward direction. Backward buckling in the backward direction, for example due to vibration, is prevented by the self-locking of the motor drive not shown.

It should be mentioned that unintentional actuation of the swivel mechanism of passenger seat 15a or 15b, 15d, 15e can be prevented by providing a detector which deactivates the drive motor as long as the passenger seat concerned is occupied.

It should also be mentioned that the displacement of seat cushion device 152 relative to seat shell 151 is in this example achieved by means of suitable rails (not shown) between seat shell 151 and seat cushion device 152.

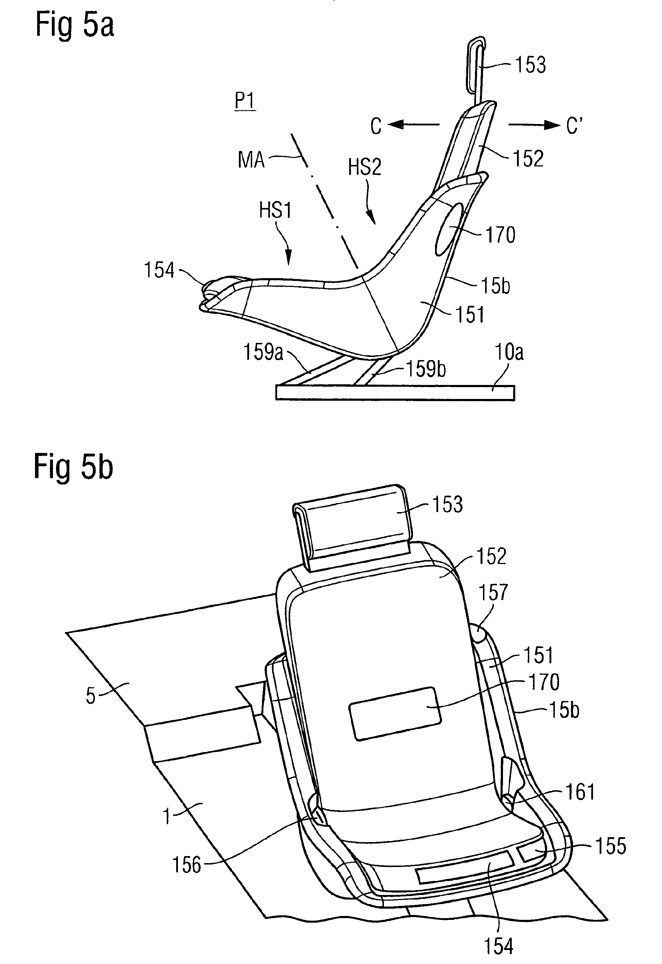

Figs. 5a,b show a side view and a perspective view of the seat device according to the embodiment of this invention in different swivel positions to explain a backrest adjustment mechanism.

As can be seen in Figs. 5a, b, an air cushion pad 170 is provided between seat shell 151 and seat cushion device 152, which pad enables a distance between seat shell 151 and seat cushion device 152 to be changed in the region of air cushion pad 170. In seat position P1 shown in Figs. 5a, 5b, this effects a displacement of seat cushion 152 in forward direction C and backward direction C' respectively, thereby providing a user-specific adjustment.

Obviously it is also possible to provide such an air cushion pad 170 in the other half shell or to provide such air cushion pads in further locations between seat shell 151 and seat cushion device 152, thereby effecting a fine adjustment to the contours of the sitting person.

Air cushion pad 170 can be actuated by means of a suitable air compressor (not shown).

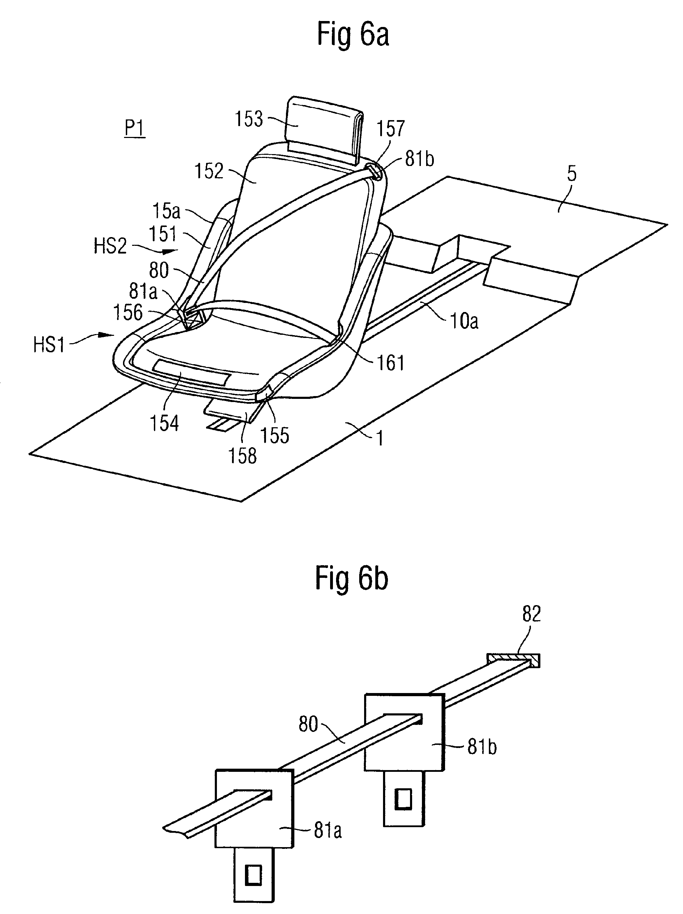

Figs. 6a, b show a perspective view of a motor vehicle seat arrangement including a seat device according to the embodiment of this invention to explain a seat belt mechanism.

The seat belt mechanism explained in more detail in Figs. 6a, b has, in the pelvic region of seat shell 151, on the left side of seat 15a, a safety reel device 161, with a reelable seat belt 80, and on the right side a first seat belt lock 156. A second seat belt lock 154 is provided at the longitudinal end of first half-shell region HS1, and a third seat belt lock 157 is provided at the longitudinal end of second half-shell region HS2, each on the left side of seat shell 151. Seat belt locks 155, 156, 157 and seat belt reel device 161 are preferably directly integrated in seat shell 151.

With reference to Fig. 6b it is shown that two stop tongue parts 81a, 81b are provided one behind the other on one belt end 82 of seat belt 80 projecting from seat belt reel device 161. In seat position P1 shown in Fig. 6a, seat belt 80 is first reeled completely in seat belt reel device 161, only belt end 82 and the two stop tongue parts 81, 81b projecting from it.

For fastening the belt in seat position P1, the user first locks lock tongue part 81a in seat belt lock 156, then stop tongue part 81b in seat belt lock 157. This therefore provides the normal three-point fastening. To release the belt the user merely releases seat belt lock 156, seat belt lock 157 remaining locked as long as seat position P1 is maintained.

If a change in position is desired by swivelling from seat position P1 to seat position P5, both seat belt locks 156 and 157 are released, and the belt is again reeled completely in seat belt reel device 161.

When seat position P5 is reached, stop tongue part 81a is again locked in seat belt lock 156, but in this seat position stop tongue part 81b is locked in seat belt lock 155.

Because of this symmetrical belt lock arrangement, with a first seat belt lock 156 for both seat positions P1 and P5 and a second seat belt lock 157 for first seat position P1 and a second seat belt lock 155 for seat position P5, a simple flexibly applicable seat belt arrangement is provided.

It should be noted that automatic release of seat belt lock 155 or 157 could be provided in the case of swivelling passenger seat 15a from seat position P1 to seat position P5.

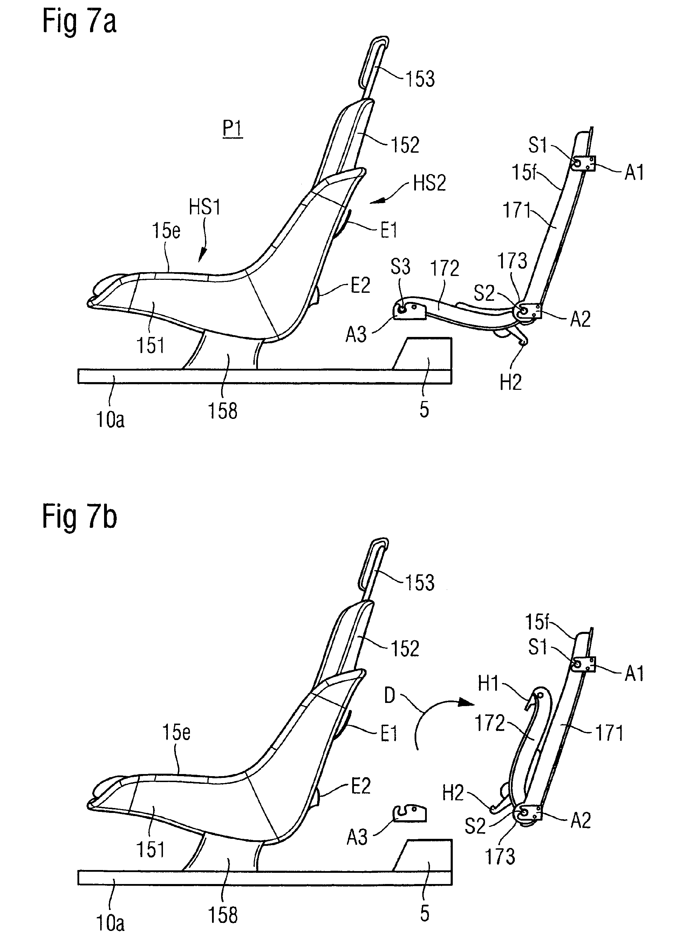

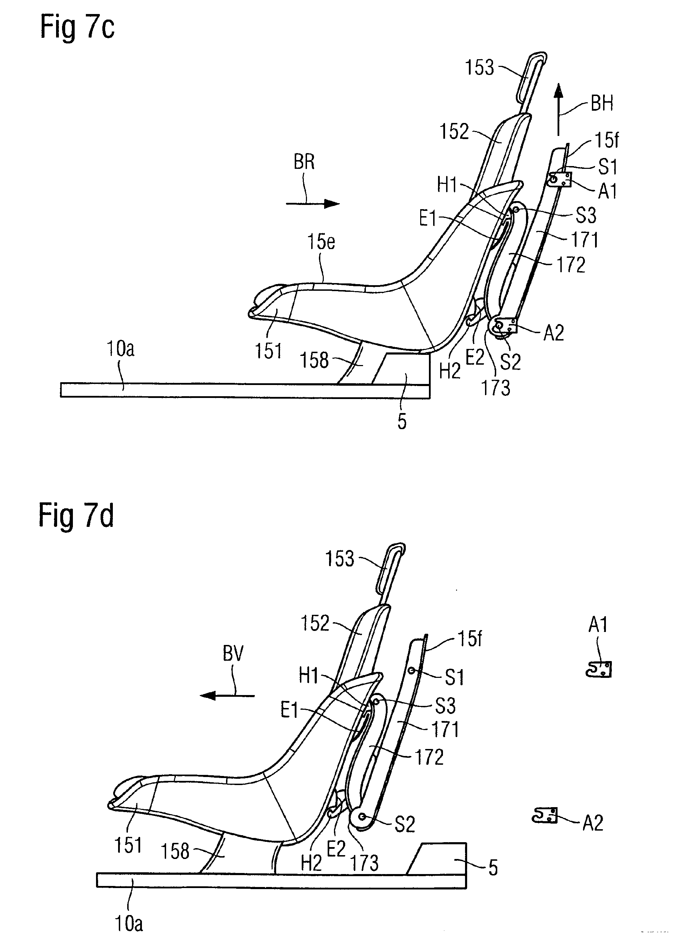

Figs. 7a-d show side views of the seat device according to the embodiment of this invention to explain an emergency seat displacement mechanism.

Fig. 7a shows passenger seat 15e in seat position P1, i.e. orientated in the forward direction. Reference symbols E1, E2 denote a receiving device provided on the rear side of half-shell HS2, e.g. in the form of lugs or pockets or hooks, for receiving a corresponding engaging device H1, H2, which is provided, for example, in the form of hooks on the lower side of a seat part 172 of emergency seat 15f, seat part 172 being connected by a joint 173 to rear part 171 so that it folds.

Also with regard to Fig. 7a, reference symbols A1, A2, A3 each denote locking element receiving devices which are connected to the vehicle body (not shown). Stop elements S1, S2, S3, e.g. pins or noses, fitted to emergency seat 15f, are locked with stop device A1, A2, A3, according to the condition shown in Fig. 7a, so that emergency seat 15f is stably mounted.

If a user wishes to remove emergency seat 15f from platform 15, to enlarge the loading space, for example, this can be achieved in this embodiment, by means of a piggy-back mechanism whereby passenger seat 15e moves emergency seat 15f by means of receiving devices E1, E2 into a piggy-back position, which will be explained in further detail below.

To prepare for the piggy-back function the user folds seat part 172 of emergency seat 15f out of the horizontal seat position into a vertical support position, as illustrated by arrow D in Fig. 7b. In this case stop element S2 is released from locking element receiving device A3, as shown in Fig. 7b.

According to Fig. 7c passenger seat 15e is moved along rail 10a by means of a drive, not shown, in backward direction BR, after seat part 172 of emergency seat 15f is folded up, until the receiving devices have received engaging device H1, H2, in the form of the two hooks A1, A2 on the lower side of seat part 172 of emergency seat 15, so that they lock.

In connection with Fig. 7c, this locked position between receiving device E1, E2 and engaging device H1, H2 is shown. Furthermore, receiving devices E1, E2 are vertically adjustable on the rear of seat shell 152 of passenger seat 15e, so that the locked emergency seat 15f can be raised in direction BH and stop elements S1, S2 can therefore be removed from locking element receiving devices A1, A2 by moving passenger seat 15e forward in forward direction BV after leaving the locking position. Emergency 15f is therefore removed from platform 5 and the loading space is correspondingly enlarged.

For re-installing emergency seat 15f in its receiving devices A1, A2, A3, the steps described above are carried out in the reverse direction.

Although in the embodiment described above the passenger seats have been swivelled by means of two support struts, there are also other possibilities of achieving such swivelling, e.g. by means of suitable ball joints.

The possibilities of fitting emergency seats to the backrest of the passenger seats can not only achieved by means of the receiving/engaging devices shown but can also be achieved in many other ways and means.

Finally, it is not absolutely necessary for the seat cushion device to be displaceable via rails relative to the seat shell, but suitable articulated arms could be provided to achieve this displacement.

## Claims

1. A passenger seat device for motor vehicles with:
a seat shell device (151) with a first and a second half-shell region, both of which can serve both as a backrest region and as a seat region;
a seat cushion device (152) which is fitted in the seat shell device (151); and
a bearing device 159a, 159b, 160a, 12a, 10a) for the pivoting of the seat shell device (151) in the motor vehicle;
wherein the bearing device is designed so that the seat shell device (151) can be swivelled about a horizontal axis from a seat position (P1) orientated in the forward direction to a seat position (P5) orientated in the backward direction;
as a result of which a backrest region and a seat region of the seat shell device (151) are exchangeable according to the two different seat positions (P1 P5); **characterized in that** in a pelvic region of the seat shell device (151), a seat belt reel device (161) with a reelable seat belt (80) is provided on one side, and a first seat belt lock (156) is provided on the other side, wherein a second seat belt lock 157) is provided at the longitudinal end of the first half-shell region, and a third safety belt lock (155) is provided at the longitudinal end of the second half-shell region, and wherein a first and second stop tongue part (81, 81b) are provided on the seat belt (80), which parts can be engaged either in the first and second or in the first and third seat belt lock, according to the seat position (P1; P5).

2. The passenger seat device according to Claim 1, wherein the bearing device has two supporting struts (159a, 159b) which can be articulated in the form of a four-bar linkage to the seat shell device (151) on the one hand and to the motor vehicle on the other.

3. The passenger seat device according to Claim 2, wherein the bearing device (159a, 159b, 160a, 12a, 10a) has a first rail device (10a) which can be fastened in the motor vehicle floor; and has a second rail device (12a) which is linearly displaceable in the first rail device (10a), wherein the two supporting struts (159a, 159b) are mounted one behind the other in the second rail device (12a) along a horizontal swivel axis (160a).

4. The passenger seat device according to one of the preceding claims, wherein the seat cushion device (152) in the seat shell device (151) is displaceably fitted so that in the respective seat position (P1; P5) it projects from the seat shell device (151) in the longitudinal direction in the backrest region, and seals essentially flush with the seat shell device (151) in the longitudinal direction in the seat region.

5. The passenger seat device according to one of the preceding claims, wherein a first and second headrest device (153, 154) are fitted retractably on the longitudinal ends of the seat cushion device (152), as a result of which a headrest device (153, 154) can be retracted in the seat region in both seat positions (P1; P5) and the other headrest device (153, 154) can be extended in the backrest region.

6. The passenger seat device according to one of the preceding claims, wherein at least one air cushion pad device (170) is provided between the seat shell device (151) and the seat cushion device (152), as a result of which a distance between the seat shell device (151) and the seat cushion device (152) can be varied in the region of the air cushion pad device (170).

7. The passenger seat device according to one of the preceding claims, wherein the seat shell device (151) is produced in one piece and the first and second half-shell regions are symmetrical to each other.

8. The passenger seat device according to one of the preceding claims, wherein a receiving device (E1, E2) is provided on the rear side of at least one of the half-shell devices for receiving a corresponding engaging device (H1, H2) of an emergency seat (15c, 15f).

9. The passenger seat device according to Claim 8, wherein the receiving device (E1, E2) is vertically adjustable so that the received emergency seat (15c, 15f) can be raised upwards out of a stop device (A1, A2) and re-inserted into the stop device (A1, A2).

10. The passenger seat device according to one of the preceding claims, wherein a drive motor is provided for swivelling the seat shell device (151).

11. The passenger seat device according to one of the preceding claims, wherein the seat shell device (151) is a plastic moulding.

## Patentansprüche

1. Fahrgastsitzvorrichtung für Kraftfahrzeuge, mit:
einer Sitzschalenvorrichtung (151) mit einem ersten und einem zweiten Halbschalenbereich, wovon beide sowohl als Rückenlehnenbereich als auch als Sitzbereich dienen können;
einer Sitzkissenvorrichtung (152), die in die Sitzschalenvorrichtung (151) eingepasst ist; und
einer Lagervorrichtung (159a, 159b, 160a, 12a, 10a), um die Sitzschalenvorrichtung (151) in dem Kraftfahrzeug zu schwenken;
wobei die Lagervorrichtung in der Weise entworfen ist, dass die Sitzschalenvorrichtung (151) um eine horizontale Achse aus einer Sitzposition (P1), die in Vorwärtsrichtung orientiert ist, in eine Sitzposition (P5), die in Rückwärtsrichtung orientiert ist, geschwenkt werden kann;
wodurch ein Rückenlehnenbereich und ein Sitzbereich der Sitzschalenvorrichtung (151) entsprechend den zwei verschiedenen Sitzpositionen (P1; P5) vertauschbar sind; **dadurch gekennzeichnet, dass** in einem Beckenbereich der Sitzschalenvorrichtung (151) auf einer Seite eine Sicherheitsgurt-Aufrollvorrichtung (161) mit einem aufrollbaren Sicherheitsgurt (80) vorgesehen ist und auf der anderen Seite ein erstes Sicherheitsgurtschloss (156) vorgesehen ist, wobei am longitudinalen Ende des ersten Halbschalenbereichs ein zweites Sicherheitsgurtschloss (157) vorgesehen ist und am longitudinalen Ende des zweiten Halbschalenbereichs ein drittes Sicherheitsgurtschloss (155) vorgesehen ist und wobei ein erstes und ein zweites Haltezungenteil (81, 81b) an dem Sicherheitsgurt (80) vorgesehen sind, wobei diese Teile je nach Sitzposition (P1; P5) entweder in dem ersten und in dem zweiten oder in dem ersten und in dem dritten Sicherheitsgurtschloss in Eingriff gebracht werden können.

2. Fahrgastsitzvorrichtung nach Anspruch 1, wobei die Lagervorrichtung zwei Unterstützungsstreben (159a, 159b) besitzt, die in Form eines Gelenkvierecks einerseits an der Sitzschalenvorrichtung (151) und andererseits am Kraftfahrzeug angelenkt sein können.

3. Fahrgastsitzvorrichtung nach Anspruch 2, wobei die Lagervorrichtung (159a, 159b, 160a, 12a, 10a) eine erste Schienenvorrichtung (10a), die im Kraftfahrzeugboden befestigt werden kann; und eine zweite Schienenvorrichtung (12a), die in der ersten Schienenvorrichtung (10a) geradlinig verlagert werden kann, besitzt, wobei die zwei Unterstützungsstreben (159a, 159b) in der zweiten Schienenvorrichtung (12a) längs einer horizontalen Schwenkachse (160a) hintereinander montiert sind.

4. Fahrgastsitzvorrichtung nach einem der vorhergehenden Ansprüche, wobei die Sitzkissenvorrichtung (152) in die Sitzschalenvorrichtung (151) verlagerbar in der Weise eingepasst ist, dass sie in der jeweiligen Sitzposition (P1; P5) aus der Sitzschalenvorrichtung (151) im Rückenlehnenbereich in Längsrichtung vorsteht und mit der Sitzschalenvorrichtung (151) im Sitzbereich in Längsrichtung im Wesentlichen bündig abschließt.

5. Fahrgastsitzvorrichtung nach einem der vorhergehenden Ansprüche, wobei eine erste und eine zweite Kopfstützenvorrichtung (153,154) an den longitudinalen Enden der Sitzkissenvorrichtung (152) einziehbar angebracht sind, wodurch in beiden Sitzpositionen (P1; P5) jeweils eine Kopfstützenvorrichtung (153, 154) in den Sitzbereich zurückgezogen werden kann und die jeweils andere Kopfstützenvorrichtung (153, 154) in den Rückenlehnenbereich ausgefahren werden kann.

6. Fahrgastsitzvorrichtung nach einem der vorhergehenden Ansprüche, wobei zwischen der Sitzschalenvorrichtung (151) und der Sitzkissenvorrichtung (152) wenigstens eine Luftkissenpolstervorrichtung (170) vorgesehen ist, wodurch ein Abstand zwischen der Sitzschalenvorrichtung (151) und der Sitzkissenvorrichtung (152) im Bereich der Luftkissenpolstervorrichtung (170) verändert werden kann.

7. Fahrgastsitzvorrichtung nach einem der vorhergehenden Ansprüche, wobei die Sitzschalenvorrichtung (151) einteilig hergestellt ist und der erste und der zweite Halbschalenbereich zueinander symmetrisch sind.

8. Fahrgastsitzvorrichtung nach einem der vorhergehenden Ansprüche, wobei an der Rückseite wenigstens einer der Halbschalenvorrichtungen eine Aufnahmevorrichtung (E1, E2) vorgesehen ist, um eine entsprechende Eingriffvorrichtung (H1, H2) eines Notsitzes (15c, 15f) aufzunehmen.

9. Fahrgastsitzvorrichtung nach Anspruch 8, wobei die Aufnahmevorrichtung (E1, E2) vertikal einstellbar ist, so dass der aufgenommene Notsitz (15c, 15f) aus einer Anschlagvorrichtung (A1, A2) nach oben angehoben und wieder in die Anschlagvorrichtung (A1, A2) eingesetzt werden kann.

10. Fahrgastsitzvorrichtung nach einem der vorhergehenden Ansprüche, wobei ein Antriebsmotor vorgesehen ist, um die Sitzschalenvorrichtung (151) zu drehen.

11. Fahrgastsitzvorrichtung nach einem der vorhergehenden Ansprüche, wobei die Sitzschalenvorrichtung (151) ein gegossenes Kunststoffprodukt ist.

## Revendications

1. Dispositif formant siège passager pour véhicules automobiles avec :
un dispositif formant coque de siège (151) avec une première et une seconde région de demi-coque, les deux pouvant servir tant comme région de dossier que comme région d'assise ;
un dispositif formant coussin de siège (152) qui est ajusté dans le dispositif formant coque de siège (151) ; et
un dispositif à palier (159a, 159b, 160a, 12a, 10a) pour le pivotement du dispositif formant coque de siège (151) dans le véhicule automobile ;
dans lequel le dispositif à palier est conçu de sorte que le dispositif formant coque de siège (151) peut être pivoté autour d'un axe horizontal à partir d'une position de siège (P1) orientée dans le sens avant jusqu'à une position de siège (P5) orientée dans le sens arrière ;
en conséquence de quoi une région de dossier et une région d'assise du dispositif formant coque de siège (151) peuvent être échangées selon les deux positions de siège différentes (P1 ; P5) ; **caractérisé en ce que** dans une région ventrale du dispositif formant coque de siège (151), un dispositif formant ceinture de sécurité à enrouleur (161) avec une ceinture de sécurité pouvant être enroulée (80) est prévu sur un côté, et un premier verrou de ceinture de sécurité (156) est prévu de l'autre côté, dans lequel un deuxième verrou de ceinture de sécurité (157) est prévu au niveau de l'extrémité longitudinale de la première région de demi-coque, et un troisième verrou de ceinture de sécurité (155) est prévu au niveau de l'extrémité longitudinale de la seconde région de demi-coque, et dans lequel une première et une seconde partie de languette d'arrêt (81, 81b) sont prévues sur la ceinture de sécurité (80), lesquelles parties peuvent être en prise soit dans le premier et dans le deuxième soit dans le premier et dans le troisième verrou de ceinture de sécurité, selon la position de siège (P1 ; P5).

2. Dispositif formant siège passager selon la revendication 1, dans lequel le dispositif à palier a deux montants de support (159a, 159b) qui peuvent être articulés sous la forme d'un quadrilatère articulé sur le dispositif formant coque de siège (151) d'une part et sur le véhicule automobile d'autre part.

3. Dispositif formant siège passager selon la revendication 2, dans lequel le dispositif à palier (159a, 159b, 160a, 12a, 10a) a un premier dispositif formant rail (10a) qui peut être fixé dans le plancher de véhicule automobile ; et a un second dispositif formant rail (12a) qui peut être déplacé de façon linéaire dans le premier dispositif formant rail (10a), dans lequel les deux montants de support (159a, 159b) sont montés l'un derrière l'autre dans le second dispositif formant rail (12a) le long d'un axe de pivot horizontal (160a).

4. Dispositif formant siège passager selon l'une des revendications précédentes, dans lequel le dispositif formant coussin de siège (152) dans le dispositif formant coque de siège (151) est ajusté de façon à pouvoir être déplacé de sorte que dans la position de siège respective (P1 ; P5) il dépasse du dispositif formant coque de siège (151) dans la direction longitudinale dans la région de dossier, et scelle sensiblement à fleur le dispositif formant coque de siège (151) dans la direction longitudinale dans la région d'assise.

5. Dispositif formant siège passager selon l'une des revendications précédentes, dans lequel un premier et un second dispositif formant appui-tête (153, 154) sont ajustés de façon à pouvoir être rétractés sur les extrémités longitudinales du dispositif formant coussin de siège (152), en conséquence de quoi on peut rétracter un dispositif formant appui-tête (153, 154) dans la région d'assise dans les deux positions de siège (P1 ; P5) et l'autre dispositif formant appui-tête (153, 154) peut être étendu dans la région de dossier.

6. Dispositif formant siège passager selon l'une des revendications précédentes, dans lequel au moins un dispositif formant rembourrage à coussin d'air (170) est prévu entre le dispositif formant coque de siège (151) et le dispositif formant coussin de siège (152), en conséquence de quoi une distance entre le dispositif formant coque de siège (151) et le dispositif formant coussin de siège (152) peut être modifiée dans la région du dispositif formant rembourrage à coussin d'air (170).

7. Dispositif formant siège passager selon l'une des revendications précédentes, dans lequel le dispositif formant coque de siège (151) est produit en une pièce et les première et seconde régions de demi-coque sont symétriques l'une par rapport à l'autre.

8. Dispositif formant siège passager selon l'une des revendications précédentes, dans lequel un dispositif formant réception (E1, E2) est prévu sur le côté arrière d'au moins un des dispositifs formant demi-coque pour recevoir un dispositif de mise en prise correspondant (H1, H2) d'un siège de secours (15c, 15f) .

9. Dispositif formant siège passager selon la revendication 8, dans lequel le dispositif formant réception (E1, E2) est verticalement réglable de sorte que le siège de secours reçu (15c, 15f) peut être élevé vers le haut hors d'un dispositif d'arrêt (A1, A2) et réinséré dans le dispositif d'arrêt (A1, A2).

10. Dispositif formant siège passager selon l'une des revendications précédentes, dans lequel un moteur d'entraînement est prévu pour faire pivoter le dispositif formant coque de siège (151).

11. Dispositif formant siège passager selon l'une des revendications précédentes, dans lequel le dispositif formant coque de siège (151) est un moulage en plastique.
